# EUROPÄISCHE PATENTSCHRIFT

(11) **EP 3 444 605 B1**
(45) Veröffentlichungstag und Bekanntmachung des Hinweises auf die Patenterteilung: **18.03.2020**
(21) Anmeldenummer: 17186652.8
(22) Anmeldetag: 17.08.2017
(51) Int. Cl.: G01N 29/14, B06B 1/06, G01L 27/00, G01D 3/08, G01N 29/24, G01N 29/30, H04R 29/00, G01H 11/08

(54) **ULTRASCHALLMIKROFON MIT SELBSTTEST**
ULTRASONIC MICROPHONE WITH SELF-TEST
MICROPHONE À ULTRASONS POURVU DE TEST INTÉGRÉ

(43) Veröffentlichungstag der Anmeldung: 20.02.2019
(73) Patentinhaber: Sonotec Ultraschallsensorik Halle GmbH, 06112 Halle / Saale (DE)
(72) Erfinder: JOHN, Ronald, 06124 Halle (Saale) (DE); PROBST, Christian, 06179 Teutschenthal (DE)
(74) Vertreter: Maikowski & Ninnemann Patentanwälte Partnerschaft mbB

(56) Entgegenhaltungen:
- EP-A1- 2 860 506
- JP-A- H11 266 498
- US-A1- 2013 294 201
- US-A1- 2014 339 657

## Beschreibung

### Gebiet der Erfindung

Die Erfindung betrifft ein Ultraschallmikrofon für die stationäre Dichtheitsüberwachung von Anlagen und Ausrüstungen für komprimierte Gase, wobei das Ultraschallmikrofon eine Membran, ein Schallwandlerelement, eine Einrichtung zur Durchführung eines Selbsttests und ein Gehäuse aufweist, wobei Schallwandler und Selbsttesteinrichtung beide im Gehäuse des Ultraschallmikrofons enthalten sind. Die Einrichtung zur Durchführung eines Selbsttests weist ein weiteres Schallwandlerelement auf. Die Schallwandlerlemente des Ultraschallmikrofons und der Selbsttesteinrichtung sind vorzugsweise Bestandteile von Piezokompositen. Die Erfindung betrifft weiterhin ein Verfahren zur Durchführung eines Selbsttests des erfindungsgemäßen Ultraschallmikrofons wobei das Verfahren die elektrische Anregung von Schwingungen der Mikrofon-Membran und die Plausibilitätsprüfung der aufgenommenen Signale aufweist und wobei zur Schwingungserzeugung der Schallwandler der Selbsttesteinrichtung dient, die im Gehäuse des Ultraschallmikrofons enthalten ist.

### Hintergrund der Erfindung

Die stationäre Dichtheitsüberwachung von Anlagen und Ausrüstungen für komprimierte Gase erfolgt oft mit Ultraschall. Hierzu werden in der Nähe der gefährdeten Armaturen Ultraschallmikrofone installiert, die im Falle eines Lecks den entstehenden Schall detektieren. Die daran angeschlossene Elektronik löst eine Alarmmeldung aus.

Die Sicherheit der Überwachung hängt insbesondere von der Zuverlässigkeit der Mikrofone und der Elektronik ab. Neben redundanter Ausführung ist die Durchführung von zyklischen Selbsttests gängige Praxis. Kerngedanke bei solchen Selbsttests ist es, das Mikrofon einem in Frequenz und Amplitude bekannten Testsignal auszusetzen und das Empfangssignal auf Plausibilität zu bewerten. Da immer auch ein Empfangsverstärker erforderlich ist, wird zweckmäßigerweise dessen Ausgangssignal herangezogen und man hat diesen gleich mit überprüft. Allerdings kann während dem Selbsttest keine Dichtheitsüberwachung von Anlagen und Ausrüstungen stattfinden. Deshalb muss der Selbsttest schnell vollzogen werden.

Im Stand der Technik sind verschiedene Anordnungen zur Durchführung von Selbsttests bekannt. Bei einer bekannten Anordnung wird zum Beispiel in Mikrofonnähe ein Lautsprecher installiert, der während des Selbsttests Schall abstrahlt. Der Schall wird über die Luftstrecke vom Mikrofon aufgenommen, das entstehende elektrische Signal geprüft und daraus auf die Funktionstüchtigkeit geschlossen, z.B. durch Vergleich mit den gespeicherten Daten, die nach der Herstellung des Mikrofons erhoben worden sind.

Das Testsignal kann auch erzeugt werden, indem mittels eines Generators die Mikrofonmembran elektrisch zu Schwingungen angeregt wird. Danach wird der Generator abgeschaltet und das Ausschwingen der Membran durch die Empfangselektronik beobachtet. Aus dem Ausschwingverhalten, welches von den Eigenschwingungen der Membran bestimmt wird (Frequenzen, Güte etc.), wird ebenfalls die Funktionstüchtigkeit abgeleitet.

Damit die Prüfung mit einem Lautsprecher auch bei Umgebungslärm funktioniert, muss für den Test eine hohe Schallintensität gewählt werden. Sind mehrere solcher selbstüberwachenden Sensoren in relativer Nähe zueinander installiert, beeinflussen sie sich gegenseitig, was zur Verfälschung der Ergebnisse der Selbsttests führen kann.

Die Verfahren mit Ausnutzung der Eigenschwingungen haben zwar den Vorteil eines besonders einfachen Aufbaus, sind aber anfällig gegenüber gleichzeitig vorhandenem Luftschall. Während des Selbsttests des Mikrofons ist der Generator abgeschaltet und das Mikrofon arbeitet wieder als Schallaufnehmer, d.h. der Umgebungsschall überlagert sich dem Membranausschwingen und verfälscht das Testergebnis.

In US 2013/0166227 A1 wird beispielsweise mit einem Lautsprecher für ein Testsignal gearbeitet. Die gegenseitige Beeinflussung mehrerer gleichartiger Geräte mit ihren (lauten) Testsignalen wird minimiert aber nicht ausgeschlossen, indem jedes Gerät nur mit der unbedingt nötigen Schallintensität testet und dafür automatisch Frequenzen wählt, bei denen ein optimales Signal-Rausch-Verhältnis erzielbar ist.

US 2014/0320154 A1 betrifft ein industrielles Feldmessgerät mit einem piezoelektrischen Wandler, das eine Selbsttestung des Zustands des piezoelektrischen Wandlers während eines Selbsttestmodus durchführt. Ein Ladestrom wird dem piezoelektrischen Wandler zugeführt, und die Spannung an dem piezoelektrischen Wandler als Ergebnis des Ladestroms wird überwacht. Ein diagnostisches Testergebnis, das den Zustand des piezoelektrischen Wandlers anzeigt, wird basierend auf der Größe der Spannung erzeugt und erlaubt lediglich die Erkennung eines kurzgeschlossenen, offenen oder funktionierenden piezoelektrischen Wandlers. Hierzu wird dessen elektrische Kapazität ausgemessen.

GB2515718 A beschreibt einen Ultraschallempfänger mit Piezokristall, wobei letzterer zwischen einem Widerlager und der mechanisch vorgespannten Membran angeordnet ist. Auch ein Selbsttest wird vorgeschlagen. Dieser bezieht sich aber explizit auf die Überprüfung der fehlerlosen Funktion der Spannkonstruktion.

US 2016032752 A1 betrifft einen Sensor, der mehrerer Schallwandler umfasst, die reziprok arbeiten und sich gegenseitig prüfen können. Hohlräume zwischen den Schallwandlern sind, als Voraussetzung für die Durchführung von Selbsttests flüssigkeitsgefüllt. Dadurch ist es nicht möglich, Körperschwingungen des Sensors in einem Selbsttest zu überprüfen, da diese durch die durch die Flüssigkeit übertragenen Schwingungen überlagert wird.

EP 2860506 A betrifft einen Ultraschalldetektor sowie ein Verfahren zur Detektion von Ultraschall. Der Ultraschalldetektor umfasst eine Vorrichtung für einen Selbsttest in Form einer separat außerhalb des Ultraschallmikrofons angeordneten Ultraschallquelle.

JP H11 266498 offenbart einen Ultraschallwandler mit einem Piezoelement ohne Selbsttestfunktion.

US 2013/0294201 offenbart einen Ultrabreitband Transducer (pMUT) bei dem mehrerer Piezokomposite in einem Array angeordnet sind, wobei der Transducer keine Selbsttestfunktion aufweist.

US 2014/0339657 A1 offenbart ein piezoelektrisches MEMS Mikrofon ohne Selbsttest.

### Beschreibung der Erfindung

Mit den im Stand der Technik beschriebenen Schallsensoren ist es nur möglich, bestimmte Fehlerarten im Selbsttest zu prüfen. Die möglichen Fehler, die zu einer Veränderung der Schwingungseigenschaften des Sensors führen können, sind aber vielfältig und können z.B. ausgewählt sein aus Defekten in der Klebung zwischen Schwinger und Membran, der Zerstörung der Membran, der Belastung der Membran durch Verschmutzung, dem Defekt des Piezokomposits und Defekten oder Drift der Elektronik. Keines der im Stand der Technik beschriebenen Systeme ist in der Lage, in einem Selbsttest alle diese Fehlerquellen zu überprüfen.

Die Aufgabe der Erfindung besteht deshalb darin, ein Ultraschallmikrofon mit einer Selbsttesteinrichtung zu entwickeln, mit der es möglich ist, möglichst viele Fehlerarten überprüfen zu können.
Die Aufgabe der Erfindung wird gelöst durch ein Ultraschallmikrofon gemäß dem unabhängigen Anspruch 1.
Bereitgestellt wird ein Ultraschallmikrofon, das eine Membran, ein erstes Schallwandlerelement, eine Einrichtung zur Durchführung eines Selbsttests und ein Gehäuse aufweist. Das erste Schallwandlerelement ist vorzugsweise Bestandteil eines Piezokomposits. Piezokomposite zeichnen sich durch eine hohe Dämpfung unerwünschter Schwingungsmoden sowie eine hohe Bandbreite aus.
Das erfindungsgemäße Ultraschallmikrofon ist insbesondere dadurch gekennzeichnet, dass die Einrichtung zur Durchführung des Selbsttests und das erste Schallwandlerelement zusammen im Gehäuse des Ultraschallmikrofons enthalten sind. Das Gehäuse des Ultraschallmikrofons enthält im Regelfall Luft und ist nicht mit einer Flüssigkeit gefüllt. Die Schallübertragung zwischen Selbsttesteinrichtung und dem ersten Schallwandlerelement erfolgt über die Gehäusewand als Körperschall. Diese Ausführungsform des erfindungsgemäßen Ultraschallmikrofons ermöglicht es, im Gegensatz zu den aus dem Stand der Technik bekannten Systemen, nicht nur einzelne Fehlerarten, sondern eine Vielzahl an Fehlerarten im Selbsttest zu prüfen. Es ist zum Beispiel möglich, das Vorhandensein folgende Fehler, die zur Veränderung der Schwingungseigenschaften des Sensors führen können, gleichzeitig zu prüfen:
- Defekte in der Klebung zwischen Schwinger und Membran,
- Zerstörung der Membran,
- Belastung der Membran durch Verschmutzung,
- Defekte der Piezokomposite, und
- Defekte oder Drift der Elektronik.
In einer bevorzugten Ausführungsform sind die Membran und das Gehäuse aus einem Teil gefertigt. Dadurch wird die Stabilität des erfindungsgemäßen Ultraschallmikrofons gegenüber Witterungseinflüssen verbessert. Das Material weist vorzugsweise eine geeignete akustische Impedanz auf. Für diesen Verwendungszweck einsetzbare Materialien sind solche, deren akustische Impedanz im quadratischen Mittel zwischen Luft und Keramik liegt und zwischen beiden vermittelt. Geeignet sind beispielsweise spezielle Kunststoffe.

Alternativ oder zusätzlich ist ein Aufbau des erfindungsgemäßen Ultraschallmikrofons besonders geeignet, bei dem die Materialstärke der Membran wesentlich kleiner als die Wellenlänge ist. "Wesentlich kleiner" bedeutet in diesem Zusammenhang "mindestens Faktor 10", was mit einer Membrandicke im unteren Millimeterbereich erfüllbar ist: In einem Kunststoff beispielsweise liegt die Schallgeschwindigkeit bei etwa c≈2000m/s, so dass die Wellenlänge λ=20cm (f=10kHz) bis λ=2cm (f=100kHz) beträgt. Die Membran des erfindungsgemäßen Ultraschallmikrofons weist typischerweise eine Dicke im Bereich von 0,5 bis 2 mm auf.

In einer weiteren Ausführungsform kann das erfindungsgemäße Ultraschallmikrofon ein Backingmaterial aufweisen. Mit dem Backingmaterial ist es möglich, das Schwingverhalten der Piezokomposite gezielt zu beeinflussen. Bei Auswahl eines geeigneten Backingmaterials ist es beispielsweise möglich, Resonanzspitzen zu dämpfen, allerdings zu Lasten der Empfindlichkeit der Piezokomposite. Das Backingmaterial wird beispielsweise aus einem Festkörper oder einer Vergussmasse gebildet. Geeignete Vergussmassen bestehen zum Beispiel aus Kunststoffen, wie Polyurethanen (PUR), oder aus Silikon.

Je nach Einsatzzweck des erfindungsgemäßen Ultraschallmikrofons kann es zweckmäßig sein, dass das Ultraschallmikrofon ein Backingmaterial aufweist oder nicht. Das Backingmaterial beeinflusst die Bandbreite des Mikrofons. Bei einer hohen Bandbreite wird Backing eingesetzt, bei schmalbandigen Mikrofonen (im Extremfall eine Resonanzfrequenz) verzichtet man darauf.

Die Vorrichtung zur Durchführung eines Selbsttests weist vorzugsweise eine Sende-Empfangselektronik, die Signale erzeugen und auswerten kann, und wenigstens ein weiteres Schallwandlerelement auf.

In einer Ausführungsform der Erfindung weist die Sende-Empfangselektronik einen Digitalisierer und eine Recheneinheit mit Ansteuer- und Auswertesoftware auf.

In einer bevorzugten Ausführungsform der Erfindung weist die Sendeelektronik einen Signalprozessor, einen digitalen Verstärker und einen Sendewandler auf. In einer weiteren bevorzugten Ausführungsform der Erfindung weist die Empfangselektronik einen Empfangswandler, einen Vorverstärker, einen Verstärker und einen analog-/digital (a/d)-Wandler auf.
Die Bestandteile der Sendeelektronik und der Empfangselektronik sind dem Fachmann bekannt. Geeignet zur Verwendung im Ultraschallsystem gemäß der Erfindung sind konventionell erhältliche Signalprozessoren, digitale Verstärker, Sendewandler, Empfangswandler, Vorverstärker und analog-/digital (a/d)-Wandler.
In einer weiteren Ausführungsform weist die Vorrichtung zur Durchführung eines Selbsttests des erfindungsgemäßen Ultraschallmikrofons ein oder mehrere weitere Schallwandlerelemente auf. Bevorzugt ist es jedoch, insbesondere wegen des möglichst einfachen Aufbaus der Selbsttesteinrichtung, wenn die Selbsttesteinrichtung genau ein weiteres Schallwandlerelement aufweist. Die weiteren, in der Selbsttesteinrichtung enthaltenen Schallwandlerelemente sind ebenfalls vorzugsweise Bestandteile eines Piezokomposits.
Das Grundprinzip des Selbsttests des erfindungsgemäßen Ultraschallmikrofons entspricht den im Stand der Technik bekannten Verfahren: Die Mikrofonmembran wird elektrisch zum Schwingen angeregt und anschließend wird eine Plausibilitätsprüfung der aufgenommenen Signale vorgenommen. Das erfindungsgemäße Ultraschallmikrofon entwickelt jedoch den Stand der Technik weiter, indem zur Schwingungserzeugung ein zweites Schallwandlerelement, normalerweise das in der Selbsttesteinrichtung enthaltene Schallwandlerelement, dient. Dieses zweite Schallwandlerelement (Sendewandler) erzeugt Körperschall, der sich durch alle zu prüfenden Komponenten (mindestens jedoch die Membran) und ihre Verbindungen (z.B. Klebungen) des Mikrofons fortpflanzt und schließlich das erste Schallwandlerelement (Empfangswandler) erreicht. Der Vorteil diese Anordnung liegt u.a. darin, dass mit höheren Pegeln gearbeitet werden kann, als sie durch Luftschall erzeugt werden könnten, und der Einfluss von Umgebungslärm vernachlässigbar klein bleibt. Für die Anordnung der Schallwandlerelemente innerhalb des Gehäuses des erfindungsgemäßen Ultraschallmikrofons gibt es mehrere Möglichkeiten. In einer besonders bevorzugten Ausführungsform der Erfindung sind und das erste Schallwandlerelement und das zweite Schallwandlerelement als Bestandteil der Selbsttesteinrichtung zusammen in einem Piezokomposit enthalten. Das wird erreicht, indem die verfügbare Fläche des Piezokomposits unter zwei Elektroden aufgeteilt wird. Es entstehen im selben Körper de facto zwei Schwingungswandler, die durch den Piezokomposit einen hohen Grad an Unabhängigkeit voneinander aufweisen. Das wird erreicht, indem durch Trennung mindestens einer Elektrode Teile der Wandlerfläche den jeweiligen Wandlerelementen zugeordnet werden. Dabei wird die Eigenschaft des Piezokomposits gezielt ausgenutzt, nur Dickenschwingungen auszuführen. Es gibt keine Verkopplungen über Radialschwingungen, die den ganzen Körper mitschwingen lassen würden, so wie es von monolithischen Körpern normalerweise bekannt ist. Damit wird es möglich, dass die Schwingungen des Testsignalgebers (Schallwandlerelement der Selbsttesteinrichtung) den Empfängerwandler (erstes Schallwandlerelement des Ultraschallmikrofons) praktisch nur über die Mikrofonmembran erreichen.

Wie beschrieben, ist das erste Schallwandlerelement des erfindungsgemäßen Ultraschallmikrofons üblicherweise als Empfangswandler und das zweite Schallwandlerelement (in der Selbsttesteinrichtung enthalten) üblicherweise als Testsignalgeber geschaltet. In dieser Ausführungsform der Erfindung (Sende- und Empfangswandler zusammen in einem Komposit enthalten) ist es jedoch möglich, dass durch elektronische Umschalter die Zuordnung der Schallwandler als Empfangswandler und Testsignalgeber gewechselt werden kann. Durch das Umkehrprinzip (jeder Schallwandler kann als Empfangswandler oder Sendewandler bzw. Testsignalgeber arbeiten) wird zum einen bewirkt, dass sämtliche Verbindungen im Schallweg geprüft werden können. Zum anderen muss im normalen Empfangsbetrieb des Mikrofons auf die Fläche des Geberwandlers nicht verzichtet werden, was eine Empfindlichkeitseinbuße bedeuten würde. Die Fläche des Empfangswandlers kann dadurch vergrößert wird, dass der Testsignalgeber (16) elektronisch als Empfangswandler umgeschaltet wird. Weitere Vorteile dieses Aufbaus liegen in seiner Einfachheit und Robustheit.

Generell weist der Piezokomposit in dieser Ausführungsform eine Masseelektrode, eine Signalelektrode als Testsignalgeber und eine Signalelektrode als Empfangswandler aufweist.

Die räumliche Ausbreitung des Ultraschalls und die Homogenität des Schallfeldes werden maßgeblich durch die Form der Wandlerelemente beeinflusst. Grundsätzlich können die Geber- und Empfangswandler des erfindungsgemäßen Ultraschallmikrofons jede mögliche Form aufweisen. Bevorzugt ist es jedoch, wenn die Geber- und Empfangswandler des Ultraschallmikrofons ringförmig oder kreisförmig gestaltet sind. Diese rotationssymmetrische Formgebung erzielt eine rotationssymmetrische Richtcharakteristik und bei geeigneter Dimensionierung die oft gewünschte Kugelcharakteristik.

In einer zweiten Ausführungsform sind Empfangswandler und Testsignalgeber getrennt angeordnet, wobei der grundsätzliche Aufbau des Ultraschallmikrofons identisch zu der zuvor beschriebenen Ausführungsform ist. Der Testsignalgeber wird an anderer Stelle im Gehäuse des Ultraschallmikrofons angeordnet. Empfangswandler und Sendewandler sind auch in dieser Form bevorzugt Bestandteil von Piezokompositen; die jedoch voneinander getrennt angeordnet sind. Dieser Aufbau vermeidet den Zwei-Element-Wandler, ermöglicht aber trotzdem den Selbsttest. Nachteilig ist der Verzicht auf die Möglichkeit zur Zusammenschaltung beider Wandler zur Empfindlichkeitserhöhung.

Vorzugsweise ist die Sende- und die Empfangselektronik mit einer Recheneinheit verbunden. Als Recheneinheit ist jede bekannte Datenverarbeitungsanlage geeignet, wie z.B. ein PC, Laptop-Computer, Tablet-PC, Mobiltelefon, ein spezielles Steuergerät usw. Die Recheneinheit wirkt hierzu über eine Kommunikationsverbindung, beispielsweise kabelgebunden wie über eine serielle oder parallele Schnittstelle, USB-Verbindung, Mini-USB-Verbindung; oder WLAN-Verbindung oder Bluetooth-Verbindung, mit der Sende- und Empfangselektronik zusammen.

Die Ansteuer- und Auswertesoftware sind an sich konventionelle Lösungen, weisen jedoch Besonderheiten gemäß dem erfindungsgemäßen Ultraschallmikrofon und dem nachfolgend beschriebenen Verfahren auf, insbesondere betreffend die Ansteuerung des Testsignalgebers / Sendewandlers mit verschiedenen Testsignalen und die Plausibilitätsprüfung der aufgenommen Signale beim Selbsttest.

Die Erfindung stellt deshalb auch ein Computerprogrammprodukt zur Ansteuerung der Einzelelemente des Testsignalgebers / Sendewandlers mit verschiedenen Signalen bereit. In einer weiteren Ausführungsform stellt die Erfindung ein Computerprogrammprodukt zur Auswertung bzw. Plausibilitätsprüfung der aufgenommen Signale beim Selbsttest bereit.

Die Erfindung stellt weiterhin ein Verfahren zur Durchführung eines Selbsttests des erfindungsgemäßen Ultraschallmikrofons bereit.

Die zuvor beschriebenen Vorteile und vorteilhaften Ausführungsformen für das erfindungsgemäße Ultraschallmikrofon gelten gleichermaßen für das nachfolgend beschriebene Verfahren, so dass auf das zuvor Genannte Bezug genommen wird.

In einer bevorzugten Ausführungsform weist das erfindungsgemäße Verfahren die Schritte auf:
- Elektrische Anregung von Schwingungen der Mikrofon-Membran; und
- Plausibilitätsprüfung der aufgenommenen Signale,

Das Verfahren ist insbesondere dadurch gekennzeichnet, dass zur Schwingungserzeugung ein zweiter Schallwandler (Testsignalgeber) dient, der in der Selbsttesteinrichtung des erfindungsgemäßen Ultraschallmikrofons enthalten ist. Dieser zweite Schallwandler erzeugt Körperschall, der sich durch alle zu prüfenden Komponenten (mindestens jedoch die Membran) und ihre Verbindungen (z.B. Klebungen) des Mikrofons fortpflanzt und schließlich den Empfangswandler erreicht. Der Vorteil dieses Verfahrens liegt u.a. darin, dass mit höheren Pegeln gearbeitet werden kann, als sie durch Luftschall erzeugt werden könnten, und dass der Einfluss von Umgebungslärm vernachlässigbar klein bleibt.

In allen Ausführungsformen des erfindungsgemäßen Ultraschallmikrofons können bei Durchführung des Selbsttests mittels des erfindungsgemäßen Verfahrens als Testsignale bekannte Signalformen wie Dauersinus mit verschiedenen Frequenzen, Chirp oder Burst eingesetzt werden.

So kann als Testsignal beispielsweise Sinussignal, welches im Empfangswandler ein Signal bestimmter Amplitude hervorruft, z.B. 80% der Vollaussteuerung, eingesetzt werden. Wenn im Rahmen der Plausibilitätsprüfung zu hohe oder zu niedrige Amplituden außerhalb einer gewissen Toleranz festgestellt werden, deuten diese z.B. auf oszillierende Empfänger, defekte Schallwandler, Kabelbruch oder ähnliches hin.

Wird eine geringere Aussagekraft des Selbsttest akzeptiert, kann zur Auswertung auch die Betrachtung der Empfangsamplitude genügen. Hier werden Pegel gewählt, die im normalen Betriebsfall nicht erreicht werden. Das schränkt zwar den verfügbaren Dynamikbereich ein, aber im Gegenzug kann die Elektronik vereinfacht werden.

Bevorzugt ist es jedoch, wenn als Testsignale komplexe Signalformen, die durch die Breitbandigkeit des Piezokomposits möglich werden, eingesetzt werden. Im Rahmen der Plausibilitätsprüfung wird hierbei auch die spektrale Zusammensetzung ausgewertet, die durch Defekte in Klebungen, Alterungen der Membran, Ablagerungen auf der Membran und ähnliches beeinflusst wird und somit Rückschlüsse auf derartige Fehler des Ultraschallmikrofons gemäß der Erfindung erlaubt.

Eine Möglichkeit der Auswertung im Rahmen der Plausibilitätsprüfung ist, bei der Herstellung des Ultraschallmikrofons ein Referenzspektrum zu ermitteln und dieses Referenzspektrum Spektrum in einem nichtflüchtigen Speicher der Elektronik des Ultraschallmikrofons zu hinterlegen. Mit diesem Referenzspektrum kann dann das im Selbsttest ermittelte Spektrum verglichen werden. Unterschiede bzw. Ähnlichkeiten zwischen den beiden Spektren werden im Rahmen der Plausibilitätsprüfung ermittelt und ausgewertet. Aus der Ähnlichkeit der Spektren wird die Funktionstüchtigkeit des Mikrofons abgeleitet.

Der tolerierbare Unterschied zwischen dem gemessenen und dem Referenzspektrum ist von Mikrofoneigenschaften, Einsatzbedingungen und Sicherheitsansprüchen abhängig. Für die Plausibilitätsprüfung können dem Fachmann bekannte Verfahren, wie z.B. Korrelation, genutzt werden, die mit quantitativen Bewertungen kombiniert sind (z.B. der absolute Betrag wichtiger Spektrallinien, das Verhältnis typischer Frequenzen zueinander usw.). Das gewünschte Sicherheitsniveau bestimmt die Komplexität, der die Algorithmen in der Software gewachsen sein müssen.

Die Erfindung wird nachfolgend anhand von 3 Zeichnungen näher erläutert.

Es zeigen:
- **Figuren 1 und 2:**: schematisch ein Ultraschallmikrofon gemäß der Erfindung in der Ausführungsform mit einem Zwei-Element Piezokompositen;
- **Figuren 3 und 4:**: schematisch ein Ultraschallmikrofon gemäß der Erfindung in der Ausführungsform mit zwei Ein-Element Piezokompositen; und
- **Figur 5:**: einen Zwei-Element Piezokompositen mit Testsignalgeber und Empfangswandler.

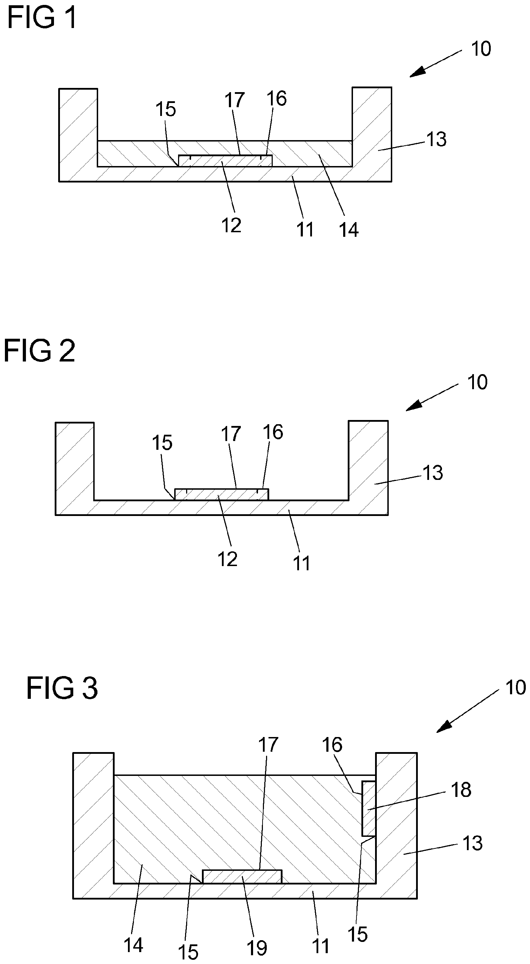

Figur 1 zeigt schematisch ein Ultraschallmikrofon 10 gemäß der Erfindung, wobei das Ultraschallmikrofon 10 eine Membran 11, ein erstes Schallwandlerelement 17 und eine Einrichtung zur Durchführung eines Selbsttests aufweist. Das erste Schallwandlerelement 17 und die Einrichtung zur Durchführung des Selbsttests sind zusammen im Gehäuse 13 des Ultraschallmikrofons 10 enthalten.

In dem hier gezeigten Beispiel weist das Ultraschallmikrofon 10 ein Backingmaterial 14 auf. Das Vorliegen des Backingmaterials 14 ist optional. Mit dem Backingmaterial 14 ist es möglich, das Schwingverhalten der Piezokomposite gezielt zu beeinflussen. Bei Auswahl eines geeigneten Backingmaterials ist es beispielsweise möglich, Resonanzspitzen zu dämpfen, allerdings zu Lasten der Empfindlichkeit der Piezokomposite.

In dem gezeigten Beispiel sind die Membran 11 und Gehäuse 13 des Ultraschallmikrofon 10 aus einem Teil gefertigt. Dadurch wird die Stabilität gegenüber Witterungseinflüssen verbessert. Die Materialdicke der Membran 11 beträgt etwa 2 mm.

Das Schallwandlerelement 17 ist Bestandteil eines Piezokomposits 12. Die Vorrichtung zur Durchführung eines Selbsttests des Ultraschallmikrofons 10 weist eine Sende-Empfangselektronik, die Signale erzeugen und auswerten kann, und ein weiteres Schallwandlerelement 16 auf. Das Schallwandlerelement 16 gehört zur Vorrichtung zur Durchführung eines Selbsttests des Ultraschallmikrofons 10 und ist ebenfalls Bestandteil eines Piezokomposits 12. Die hier gezeigte Ausführungsform hat die Besonderheit, dass der Schallwandler 17 üblicherweise als Empfangswandler und der Schallwandler 16 üblicherweise als Testsignalgeber geschaltet sind und die Schallwandler 16 und 17 in zusammen in einem Piezokomposit 12 enthalten sind. Diese Ausführungsform hat mehrere Vorteile. Durch elektronische Umschalter kann die Zuordnung der Schallwandler 16 und 17 als Empfangswandler und Testsignalgeber gewechselt werden, wodurch es möglich ist, die Fläche des Empfangswandlers 17 im normalen Empfangsbetrieb des Mikrofons zu vergrößern.

Üblicherweise ist der Piezokomposit 12 des Ultraschallmikrofons 10 so aufgebaut, dass er eine Masseelektrode 15, eine Signalelektrode als Testsignalgeber 16 und eine Signalelektrode als Empfangswandler 17 aufweist. In der hier gezeigten Ausführungsform sind die Signalelektroden für Testsignalgeber 16 und für den Empfangswandler 17 ring- bzw. kreisförmig, wodurch ein homogenes Schallfeld erzeugbar ist.

Figur 1 zeigt schematisch ein Ultraschallmikrofon 10 in der Ausführungsform mit einem Zwei-Element-Piezokompositen 12 gemäß Figur 1. In dem hier gezeigten Beispiel weist das Ultraschallmikrofon 10 jedoch kein Backingmaterial auf.

Figur 3 zeigt schematisch ein Ultraschallmikrofon 10, im Grundaufbau identisch mit der Darstellung in Figur 1, jedoch mit dem Unterschied, dass der Empfangswandler 17 und Testsignalgeber 16 getrennt voneinander angeordnet sind. Getrennt angeordnet bedeutet, dass Empfangswandler 17 und Testsignalgeber 16 nicht zusammen Bestandteil eines Piezokompositen (siehe 12 in Figur 1), sondern Bestandteil von zwei Piezokompositen 18 und 19 sind, die getrennt voneinander angeordnet sind. In dem hier gezeigten Beispiel ist der Empfangswandler 17 Bestandteil des Piezokompositen 19 auf der Membran 11 und der Testsignalgeber 16 ist Bestandteil des Piezokompositen 18, der seitlich am Gehäuse 13 des Ultraschallmikrofons 10 angeordnet ist.

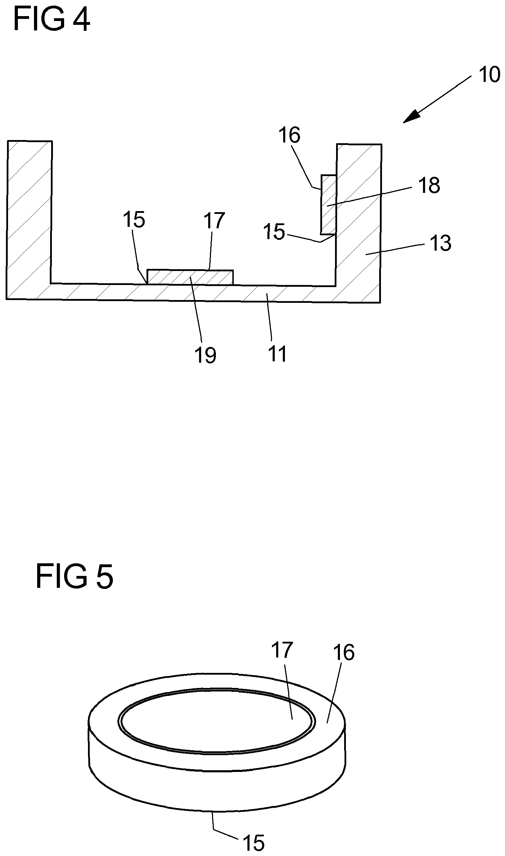

Figur 4 zeigt schematisch ein Ultraschallmikrofon 10 in der Ausführungsform mit zwei Ein-Element-Piezokompositen 18 und 19 wie in Figur 3 gezeigt. In dem hier gezeigten Beispiel weist das Ultraschallmikrofon 10 jedoch kein Backingmaterial auf.

Figur 3 zeigt einen Zwei-Element Piezokompositen des Ultraschallmikrofons 10, der eine Masseelektrode 15, einen Empfangswandler 17 und einen Testsignalgeber 16 aufweist. In dem hier gezeigten Beispiel sind Empfangswandler 17 und einen Testsignalgeber 16, wodurch ein homogenes Schallfeld erzeugt werden kann.

Das erfindungsgemäße Ultraschallmikrofon und das Verfahren zur Durchführung des Selbsttests haben mehrere Vorteile und beinhalten mehrere Weiterentwicklungen gegenüber dem Stand der Technik. Der Aufbau es erfindungsgemäßen Ultraschallmikrofons ist kleiner und kompakterer sowie mechanisch robuster. Es ist kein zweites Gehäuse für eine Prüf-bzw. Luftschallquelle erforderlich. Der Selbsttest ist robust gegen Umgebungslärm. Durch den einfacheren Aufbau mit weniger Komponenten erhöht sich die Zuverlässigkeit der Selbsttests. Der Testsignalgeber benötigt nur eine geringere elektrische Leistung, wodurch der Strombedarf sinkt. Während des Selbsttests wird kaum Schall außerhalb des Gehäuses des Ultraschallmikrofons abgestrahlt, andere in der Nähe befindliche ähnliche Sensoren werden nicht gestört. Mit dem erfindungsgemäßen Ultraschallmikrofon ist es im Rahmen des Selbsttests möglich, vielfältige Fehler, die zu einer Veränderung der Schwingungseigenschaften des Sensors (Empfangswandlers) führen können, wie z.B. Defekte in der Klebung zwischen Schwinger und Membran, Zerstörung der Membran, Belastung der Membran durch Verschmutzung, Defekt des Piezokomposits und Defekten oder Drift der Elektronik, zu erkennen. Der Aussagegehalt der Leckprüfung im Betriebsmodus des Ultraschallmikrofons ist vergleichbar mit den bereits verfügbaren Systemen und Verfahren.

### Liste der Bezugszeichen

- 10: Ultraschallmikrofon
- 11: Mikrofon-Membran
- 12: Zwei-Element Piezokomposit
- 13: Mikrofon-Gehäuse
- 14: Backingmaterial
- 15: Masseelektrode
- 16: Signalelektrode des Testsignalgebers, Geberwandler
- 17: Signalelektrode des Empfangswandlers, Empfangswandler
- 18: Piezokomposit des Testsignalgebers
- 19: Piezokomposit des Empfangswandlers

## Patentansprüche

1. Ultraschallmikrofon (10), wobei das Ultraschallmikrofon (10) eine Membran (11), ein erstes Schallwandlerelement (17) als Empfängerwandler in Form eines Piezokompositen, ein Gehäuse (13) und eine Einrichtung zur Durchführung eines Selbsttests aufweist, **dadurch gekennzeichnet, dass**
die Einrichtung für die Durchführung eines Selbsttestes ein weiteres Schallwandlerelement (16) als Testsignalgeber in Form eines Piezokompositen aufweist;
wobei das eine weitere Schallwandlerelement (16) dazu eingerichtet ist Körperschall zu erzeugen, der sich durch alle zu prüfenden Komponenten, mindestens jedoch die Membran, und ihre Verbindungen des Ultraschallmikrofons fortpflanzt und das erste Schallwandlerelement erreicht;
wobei das eine weitere Schallwandlerelement (16) Teil des Piezokompositen (12) des ersten Schallwandlerelements (17) ist oder als separater Piezokomposit (18) im Gehäuse (13) angeordnet ist; und das erste Schallwandlerelement (17) und die Einrichtung zur Durchführung des Selbsttests zusammen im Gehäuse (13) des Ultraschallmikrofons (10) enthalten sind.

2. Ultraschallmikrofon (10) nach Anspruch 1, weiterhin aufweisend ein Backingmaterial (14), das zur gezielten Beeinflussung des Schwingverhaltens der Piezokomposite eingerichtet ist, **dadurch gekennzeichnet, dass** das Backingmaterial (14) aus einem Festkörper oder einer Vergussmasse, vorzugsweise aus Kunststoffen, wie Polyurethanen (PUR), oder aus Silikon, gebildet wird.

3. Ultraschallmikrofon (10) nach Anspruch 1 oder 2, **dadurch gekennzeichnet, dass** das erste Schallwandlerelement (17) als Empfangswandler und das zweite Schallwandlerelement (16) als Testsignalgeber geschaltet sind und die Schallwandlerelemente (16) und (17) zusammen in einem Piezokomposit (12) enthalten sind.

4. Ultraschallmikrofon (10) nach Anspruch 3, **dadurch gekennzeichnet, dass** das Ultraschallmikrofon (10) elektronische Umschalter aufweist, die dazu eingerichtet sind, die Zuordnung der Schallwandler (16) und (17) als Empfangswandler und Testsignalgeber zu wechseln.

5. Ultraschallmikrofon (10) nach einem der Ansprüche 3 bis 4, **dadurch gekennzeichnet, dass** die Signalelektroden für Testsignalgeber (16) und für den Empfangswandler (17) ring- bzw. kreisförmig sind.

6. Verfahren zur Durchführung eines Selbsttests eines Ultraschallmikrofons (10) nach einem der vorherigen Ansprüche, wobei das Verfahren die Schritte aufweist:
• Elektrische Anregung von Schwingungen der zu prüfenden Komponenten des Ultraschallmikrofons (10) durch Körperschall;
• Plausibilitätsprüfung der aufgenommenen Signale,
**dadurch gekennzeichnet, dass** die Schwingungen durch den zweiten Schallwandler (16), der als Testsignalgeber geschaltet ist und Teil des Piezokomposits (12) ist oder der ein separater zweiter Schallwandler (16) eines separaten Piezokomposits (18) ist, erzeugt werden.

7. Verfahren nach Anspruch 6, **dadurch gekennzeichnet dass** der zweite Schallwandler (16), des Piezokomposits (12) oder (18) als Testsignalgeber geschaltet ist und Körperschall erzeugt, der sich durch alle zu prüfenden Komponenten und ihre Verbindungen des Mikrofons fortpflanzt.

8. Verfahren nach Anspruch 7, **dadurch gekennzeichnet dass** als Testsignale Signalformen wie Dauersinus mit verschiedenen Frequenzen, Chirp oder Burst eingesetzt werden.

9. Verfahren nach einem der Ansprüche 6 bis 8, **dadurch gekennzeichnet, dass** die Plausibilitätsprüfung einfache Amplitudenverfahren und/oder spektrale Auswertungen umfasst, bei denen das bei der Herstellung ermittelte Referenzspektrum in einem nichtflüchtigen Speicher hinterlegt wird und mit diesem Referenzspektrum das im Selbsttest ermittelte Spektrum verglichen wird, wobei Unterschiede zwischen den beiden Spektren ausgewertet werden und aus deren Ähnlichkeit die Funktionstüchtigkeit des Mikrofons abgeleitet wird.

10. Verfahren nach einem der Ansprüche 6 bis 9, **dadurch gekennzeichnet dass** Fehler, die ausgewählt sind aus
• Defekten in der Klebung zwischen Schwinger und Membran (11);
• Zerstörungen der Membran(11);
• Belastung der Membran(11) durch Verschmutzung
• Defekten des Piezokomposits (12, 18); und
• Defekten oder Drift der Elektronik
detektierbar sind.

## Claims

1. Ultrasonic microphone (10), wherein the ultrasonic microphone (10) comprises a membrane (11), a first sound transducer element (17) as receiver transducer in the form of a piezocomposite, a housing (13) and a device for carrying out a self-test, **characterized in that**
device for carrying out a self-test comprises a further sound transducer element (16) as test signal generator in the form of a piezocomposite;
wherein the one further sound transducer element (16) is configured to generate structure-borne sound that propagates through all components to be tested, but at least the membrane, and the connections thereof in the ultrasonic microphone and reaches the first sound transducer element;
wherein the one further sound transducer element (16) is part of the piezocomposite (12) of the first sound transducer element (17) or is arranged as a separate piezocomposite (18) in the housing (13); and the first sound transducer element (17) and the device for carrying out the self-test are contained together in the housing (13) of the ultrasonic microphone (10).

2. Ultrasonic microphone (10) according to Claim 1, furthermore comprising a backing material (14) configured for influencing the oscillation behaviour of the piezocomposites in a targeted manner, **characterized in that** the backing material (14) is formed from a solid or a potting compound, preferably from plastics, such as polyurethanes (PUR), or from silicone.

3. Ultrasonic microphone (10) according to Claim 1 or 2, **characterized in that** the first sound transducer element (17) is connected as reception transducer and the second sound transducer element (16) is connected as test signal generator and the sound transducer elements (16) and (17) are contained together in a piezocomposite (12).

4. Ultrasonic microphone (10) according to Claim 3, **characterized in that** the ultrasonic microphone (10) comprises electronic changeover switches configured to change the assignment of the sound transducers (16) and (17) as reception transducer and test signal generator.

5. Ultrasonic microphone (10) according to either of Claims 3 and 4, **characterized in that** the signal electrodes for the test signal generator (16) and for the reception transducer (17) are ring-shaped or circular.

6. Method for carrying out a self-test of an ultrasonic microphone (10) according to any of the preceding claims, wherein the method comprises the following steps:
• electrically exciting oscillations of the components to be tested of the ultrasonic microphone (10) by means of structure-borne sound;
• checking the plausibility of the recorded signals,
**characterized in that** the oscillations are generated by the second sound transducer (16), which is connected as a test signal generator and is part of the piezocomposite (12) or which is a separate second sound transducer (16) of a separate piezocomposite (18).

7. Method according to Claim 6, **characterized in that** the second sound transducer (16) of the piezocomposite (12) or (18) is connected as a test signal generator and generates structure-borne sound that propagates through all components to be tested and the connections thereof in the microphone.

8. Method according to Claim 7, **characterized in that** signal waveforms such as continuous sine with various frequencies, chirp or burst are used as test signals.

9. Method according to any of Claims 6 to 8, **characterized in that** the plausibility check comprises simple amplitude methods and/or spectral evaluations in which the reference spectrum determined during production is stored in a nonvolatile memory and the spectrum determined in the self-test is compared with said reference spectrum, wherein differences between the two spectra are evaluated and the functionality of the microphone is derived from the similarity of said spectra.

10. Method according to any of Claims 6 to 9, **characterized in that** faults selected from
• defects in the adhesive bonding between oscillator and membrane (11);
• destructions of the membrane (11);
• loading of the membrane (11) by contamination;
• defects of the piezocomposite (12, 18); and
• defects or drift of the electronics
are detectable.

## Revendications

1. Microphone à ultrasons (10), dans lequel le microphone à ultrasons (10) comporte une membrane (11), un premier élément transducteur de sons (17) en tant que transducteur de réception sous la forme d'un composite piézoélectrique, un boîtier (13) et un dispositif destiné à effectuer un auto-test, **caractérisé en ce que**
le dispositif destiné à effectuer un auto-test comporte un autre élément transducteur de sons (16) en tant que générateur de signaux de test sous la forme d'un composite piézoélectrique ;
dans lequel ledit autre élément transducteur de sons (16) est conçu pour générer un son de structure qui se propage à travers tous les composants à tester, mais au moins la membrane, et ses connexions au microphone à ultrasons, et atteint le premier élément transducteur ;
dans lequel ledit autre élément transducteur (16) fait partie du composite piézoélectrique (12) du premier élément transducteur (17) ou est disposé dans le boîtier (13) en tant que composite piézoélectrique séparé (18) ; et le premier élément transducteur (17) et le dispositif destiné à effectuer l'auto-test sont contenus ensemble dans le boîtier (13) du microphone à ultrasons (10) .

2. Microphone à ultrasons (10) selon la revendication 1, comprenant en outre un matériau de renfort (14) qui est conçu pour influencer de manière sélective le comportement vibratoire des composites piézoélectriques, **caractérisé en ce que** le matériau de renfort (14) est formé d'un corps solide ou d'une masse de scellement, de préférence en matière plastique, telle que des polyuréthanes (PUR), ou de silicone.

3. Microphone à ultrasons (10) selon la revendication 1 ou 2, **caractérisé en ce que** le premier élément transducteur (17) est connecté en tant que transducteur de réception et le second élément transducteur (16) est connecté en tant que générateur de signaux de test et les éléments transducteurs (16) et (17) sont contenus ensemble dans un composite piézoélectrique (12).

4. Microphone à ultrasons (10) selon la revendication 3, **caractérisé en ce que** le microphone à ultrasons (10) comporte des commutateurs électroniques qui sont conçus pour modifier l'affectation des transducteurs acoustiques (16) et (17) en tant que transducteurs de réception et générateurs de signaux de test.

5. Microphone à ultrasons (10) selon l'une des revendications 3 à 4, **caractérisé en ce que** les électrodes de signaux destinées aux générateurs de signaux de test (16) et au transducteur de réception (17) sont de forme annulaire ou circulaire.

6. Procédé destiné à effectuer un auto-test d'un microphone à ultrasons (10) selon l'une des revendications précédentes, dans lequel le procédé comprend les étapes consistant à :
• exciter électriquement des vibrations des composants à tester du microphone à ultrasons (10) par un son de structure ;
• tester la plausibilité des signaux enregistrés,
**caractérisé en ce que** les vibrations sont générées par le second transducteur de sons (16) qui est connecté en tant que générateur de signaux de test et qui fait partie du composite piézoélectrique (12) ou qui est un second transducteur de sons (16) séparé d'un composite piézoélectrique (18) séparé.

7. Procédé selon la revendication 6, **caractérisé en ce que** le second transducteur de sons (16) du composite piézoélectrique (12) ou (18) est connecté en tant que générateur de signaux de test et génère un son de structure qui se propage à travers tous les composants à tester et leurs connexions au microphone.

8. Procédé selon la revendication 7, **caractérisé en ce que** des formes de signaux telles qu'un sinus continu à différentes fréquences, une modulation d'impulsions en fréquence ou une salve sont utilisées en tant que signaux de test.

9. Procédé selon l'une des revendications 6 à 8, **caractérisé en ce que** le test de plausibilité comprend des procédés simples d'amplitude et/ou des évaluations spectrales, pour lesquels le spectre de référence déterminé lors de la génération est stocké dans une mémoire non volatile et le spectre déterminé lors de l'auto-test est comparé audit spectre de référence, dans lequel les différences entre les deux spectres sont évaluées et l'aptitude au fonctionnement du microphone est déterminée à partir de leur ressemblance.

10. Procédé selon l'une des revendications 6 à 9, **caractérisé en ce qu'**il est possible de détecter des erreurs choisies parmi
• des défauts de collage entre l'oscillateur et la membrane (11) ;
• une destruction de la membrane (11) ;
• une charge exercée sur la membrane (11) par des salissures,
• des défauts du composite piézoélectrique (12, 18) ; et
• des défauts ou une dérive de l'électronique.
